Europäisches Patentamt

European Patent Office

Office européen des brevets

(19)

(11) Veröffentlichungsnummer: **0 168 028**
**A2**

(12) **EUROPÄISCHE PATENTANMELDUNG**

(21) Anmeldenummer: **85108511.8**

(22) Anmeldetag: **09.07.85**

(51) Int. Cl.⁴: **G 02 C 7/10**

(30) Priorität: **11.07.84 DE 3425508**

(43) Veröffentlichungstag der Anmeldung:
**15.01.86 Patentblatt 86/3**

(84) Benannte Vertragsstaaten:
**AT BE CH FR GB IT LI NL SE**

(71) Anmelder: **Wilke, Helmut**
**Primelweg 2**
**D-2000 Hamburg 63(DE)**

(72) Erfinder: **Wilke, Helmut**
**Primelweg 2**
**D-2000 Hamburg 63(DE)**

(74) Vertreter: **Heidt, Gert, Dr. Dipl.-Ing.**
**Neuer Wall 59 III**
**D-2000 Hamburg 36(DE)**

(54) Brille zur Erzeugung eines räumlichen Bildeindruckes.

(57) Die Brille dient zur Erzeugung eines räumlichen Bildeindrucks bei einem Betrachter eines flächigen Bildes. Je eine der durchsichtigen Sichtscheiben der Brille ist im wesentlichen rotfarben, je eine im wesentlichen grünfarben. Die Sichtscheiben weisen optische Achsen auf, die in mindestens einem Winkel, möglicherweise aber auch in zwei Winkeln zu einer Blickrichtung des Betrachters verlaufen. Die Sichtscheiben können im Winkel zueinander und auch in mindestens einem Winkel zu einer von dem flächigen Bild aufgespannten Ebene verlaufen. Sie können Ebenen aufspannen, die jeweils im Winkel zu einer Verbindungslinie zwischen den Augen des Betrachters verlaufen und von dieser durchdrungen sind, oder mindestens eine Ebene aufspannen, die im Abstand zu der Verbindungslinie verläuft. Die Sichtscheiben können dabei beweglich zueinander gehalten oder starr mit dem Brillengestell verbunden sein.

Brille zur Erzeugung eines räumlichen Bildeindruckes

Die Erfindung betrifft eine Brille zur Erzeugung eines räumlichen Bildeindruckes bei einem Betrachter eines flächigen Bildes mit je einer im wesentlichen rotfarbenen und einer im wesentlichen grünfarbenen durchsichtigen Sichtscheibe.

Derartige Brillen werden dafür verwendet, sogenannte 3D-Bilder oder -filme zu betrachten und einen räumlichen Bildeindruck hervorzurufen. Hierfür ist jedoch erforderlich, daß entweder zwei in einem bestimmten Abstand zu der Brille montierte Bilder betrachtet werden oder das betrachtete Bild aus zwei Teilbildern zusammengesetzt ist, die jeweils mit einer der Komplementärfarben Rot oder Grün unterlegt sind. Die zusammengesetzten Bilder wirken ohne Benutzung einer Brille unscharf und mit verwaschenen roten beziehungsweise grünen Farbrändern, so daß für die Betrachtung dieser Bilder die Brille erforderlich ist, um einen befriedigenden Bildeindruck beim Betrachter zu erreichen.

Aufgabe der vorliegenden Erfindung ist es daher, eine Brille der eingangs genannten Art so zu verbessern, daß auch normale einfache Bilder, insbesondere Film- oder Fernsehbilder bei dem Betrachter einen räumlichen Bildeindruck hervorrufen.

Diese Aufgabe wird erfindungsgemäß dadurch gelöst, daß die Sichtscheiben optische Achsen aufweisen, die in mindestens einem Winkel zu einer Blickrichtung des Betrachters verlaufen.

0168028

Die Brille hat den Vorteil, daß die Lichtstrahlen auf ihrem Weg von der Oberfläche des Bildes zu den Augen des Betrachters an den Oberflächen der Sichtscheiben gebrochen und bedingt durch deren Winkelstellung zu der Blickrichtung des Betrachters um ein geringes Maß gegeneinander versetzt werden, so daß bei dem Betrachter ein räumlicher Bildeindruck entstehen kann.

Gemäß einer bevorzugten Ausführungsform der Erfindung verlaufen die Sichtscheiben in einem Winkel zueinander, wodurch der räumliche Bildeindruck verstärkt wird.

Gemäß einer weiteren bevorzugten Ausführungsform der Erfindung sind die Sichtscheiben beweglich zueinander gehaltert. Dies hat den Vorteil, daß die Brille auf unterschiedliche Augenabstände verschiedener Betrachter und auf die Eigenschaften des zu betrachtenden Bildes eingestellt werden kann.

Weitere Einzelheiten der Erfindung ergeben sich aus den beigefügten Zeichnungen und der nachfolgenden ausführlichen Beschreibung, in denen Ausführungsformen der Erfindung beispielsweise veranschaulicht sind.

In den Zeichnungen zeigen:

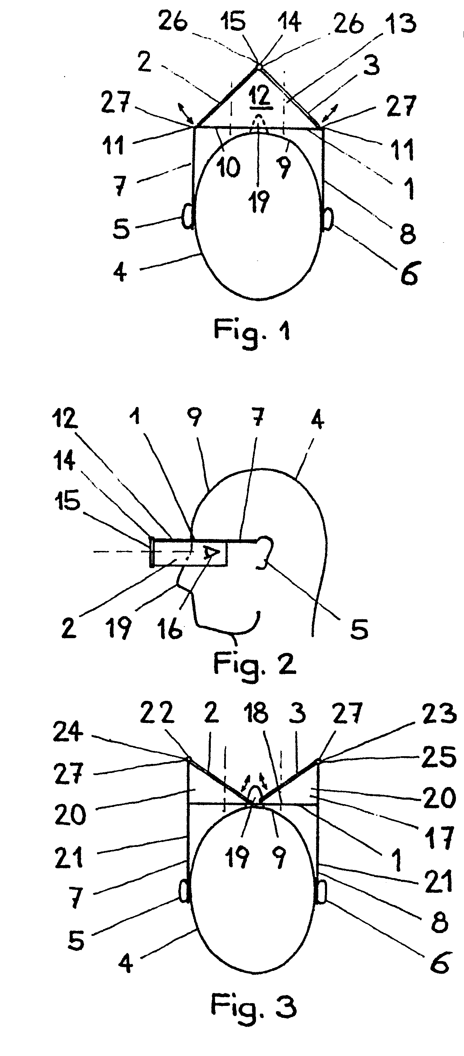

Fig. 1 : eine Draufsicht auf einen Kopf eines Betrachters mit einer Ausführungsform der Erfindung,

0168028

Fig. 2 : eine Seitenansicht eines Kopfes
mit einer Brille gemäß Figur 1,

Fig. 3 : eine Draufsicht auf einen Kopf eines
Betrachters mit einer anderen Ausführungsform der Erfindung,

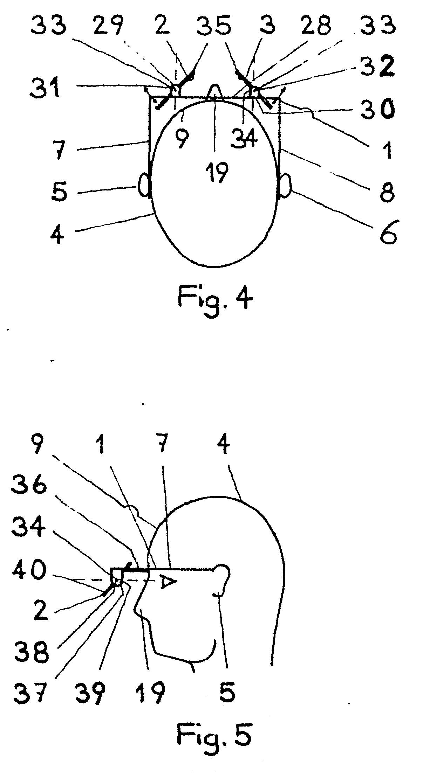

Fig. 4 : eine Draufsicht auf einen Kopf eines
Betrachters mit einer weiteren Ausführungsform der Erfindung und

Fig. 5 : eine Seitenansicht eines Kopfes
eines Betrachters mit einer weiteren
Ausführungsform der Erfindung.

Die Erfindung besteht im wesentlichen aus zwei an einem Brillengestell 1 gehalterten durchsichtigen Sichtscheiben 2, 3, deren optische Achsen im wesentlichen in mindestens einem Winkel zu einer Blickrichtung eines die Brille benutzenden Betrachters 4 verlaufen und von denen die eine im wesentlichen grün und die andere im wesentlichen rot gefärbt ist.

Das Brillengestell 1 weist im wesentlichen zwei an den Ohren 5, 6 des Betrachters 4 gehalterte Brillenbügel 7, 8 auf, die an ihren den Ohren 5, 6 abgewandten Enden mit einem im wesentlichen entlang einer Stirn 9 des Betrachters 4 verlaufenden Querträger über je ein Scharnier 11 verbunden sind. Der Querträger 1o ist mit einer Trägerplatte 12 versehen, die im wesentlichen in der Stirn 9 abgewandte Richtungen verläuft. Die Trägerplatte 12 kann als gleichschenkliges Dreieck 13 ausgebildet sein, dessen der Stirn 9 abgekehrte Ecke 14 mit einem im wesentlichen einer Körperlängsachse des Betrachters 4 parallel laufenden Lager 15 versehen ist, an dem jeweils die Sichtscheiben 2, 3 gehaltert sind und in dem sie gegeneinander und gegenüber der Trägerplatte 12 in

0168028

im wesentlichen horizontalen Richtungen verschwenkbar gelagert sind. Das Brillengestell 1 besteht im wesentlichen aus Kunststoff. Die Sichtscheiben 2, 3 können aus Glas oder aus Kunststoff gefertigt sein.

Die Brille wird wie folgt verwendet:

Der Betrachter 4 setzt die Brille in üblicher Weise auf und kann die Sichtscheiben 2, 3 um das Lager 15 verschwenken, um die Sichtscheiben 2, 3 auf den individuellen Abstand seiner Augen 16 und der gewünschten Intensität des räumlichen Bildeindruckes einstellen.

Gemäß einer bevorzugten Ausführungsform der Erfindung ist ein Brillengestell 1 mit zwei Brillenbügeln 7, 8 und einem Querträger 18 versehen, der im wesentlichen entlang der Stirn 9 des Betrachters 4 verläuft und der sich auf der Nase 19 des Betrachters 4 abstützt. Der Querträger 18 ist mit zwei im wesentlichen dreieckig ausgebildeten Trägerplatten 2o versehen, die im wesentlichen in einer Ebene verlaufen, die von dem Querträger 18 zugekehrten Bereichen 21 der Brillenbügel 7, 8 aufgespannt wird. An je einem der Stirn 9 abgewandten Eckpunkt 22, 23 der Trägerplatten 2o ist je ein Lager 24, 25 vorgesehen, dessen Schwenkachse im wesentlichen einer Körperlängsachse des Betrachters 4 parallel läuft. In den Lagern 24, 25 ist je eine Sichtscheibe 2, 3 um ihre dem Lager 24, 25 zugewandte Längskan- te 27 verschwenkbar gelagert.

0168028

Auch diese Brille kann auf die individuellen Bedürfnisse des Betrachters 4 und die optischen Eigenschaften des zu betrachtenden Bildes eingestellt werden, indem die Sichtscheiben 2, 3 im wesentlichen in horizontalen Richtungen verschwenkt werden können.

Gemäß einer weiteren bevorzugten Ausführungsform der Erfindung ist das Brillengestell 1 mit einem Querrahmen 28 versehen, der eine Ebene aufspannt, die im wesentlichen senkrecht zu einer Ebene verläuft, die von dem Querrahmen 28 zugekehrten Bereichen 21 der Brillenbügel 7, 8 aufgespannt wird. Jeweils im Bereich oberhalb und unterhalb eines jeden Auges 16 des Betrachters 4 ist der Querrahmen 28 mit Lagerböcken 29, 30 versehen, die den Querrahmen 28 in Richtungen überragen, die der Stirn 9 des Betrachters 4 abgewandt sind. Die Lagerböcke 29, 30 sind mit jeweils einem Lager 31, 32 versehen, in die an den Sichtscheiben 2, 3 vorgesehene Lagerzapfen 33 hineinragen. Die Lager 31, 32 sind jeweils im Bereich etwa einer Mitte 34 von ihnen jeweils zugekehrten Kanten 35 der Sichtscheiben 2, 3 vorgesehen. Die Lagerzapfen 33 sind an den jeweils ihnen zugekehrten und einander abgewandten Kanten der Sichtscheiben 2, 3 befestigt.

0168028

Gemäß einer weiteren bevorzugten Ausführungsform der Erfindung ist das Brillengestell 1 mit einem Querträger 36 versehen, der im wesentlichen entlang der Stirn 9 des Betrachters 4 verläuft und der mit Lagerböcken 37 versehen ist, die jeweils in horizontalen Richtungen beidseits jedes Auges 16 angeordnet sind und die jeweils Ebenen aufspannen, die einander und der Körperlängsachse des Betrachters 4 parallel verlaufen. Die Lagerböcke 37 sind mit Lagern 38 versehen, in die Lagerzapfen 39 hineinragen, die an den Lagerböcken 37 jeweils zugekehrten Kanten 40 der Sichtscheiben 2, 3 befestigt sind.

Bei dieser Brille ist es möglich, die Sichtscheiben 2, 3 im wesentlichen in vertikalen Richtungen zu verschwenken.

Die Lager 15, 24, 25, 31, 32, 38 können selbsthemmend ausgebildet sein. In ihnen können die Sichtscheiben 2, 3 stufenlos beweglich gelagert sein. Es ist ferner möglich, die Lager 15, 24, 25, 31, 32, 38 mit Rastungen versehen, die vorgewählte Winkelstellung der Sichtscheiben 2, 3 einhalten.

Es ist ferner möglich, die Sichtscheiben 2, 3 starr mit dem Brillengestell 1 zu verbinden, so daß die Sichtscheiben 2, 3 mit ihren optischen Achsen in einer vorgewählten Winkelstellung zu den Augen 16 des Betrachters 4 festgelegt sind. Es ist möglich, daß die Sichtscheiben 2, 3 mit ihren einander zugekehrten Kanten einen geringsten

0168028

Abstand zu der Nase 19 des Betrachters 4 einhalten. Es ist ferner möglich, daß sie mit ihren einander zugekehrten Kanten einen weitesten Abstand zur Nase 19 des Betrachters 4 einhalten. Sie können ferner mit ihren der Stirn 9 des Betrachters 4 zugewandten Oberkanten der Stirn 9 zugekehrt sein. Sie können ferner mit ihrer Oberkante der Stirn 9 abgekehrt sein.

Es ist möglich, das Brillengestell 1 aus Kunststoff herzustellen. Die Sichtscheiben 2, 3 können als Glas, aus Kunststoff oder aus einer Kunststoffolie bestehen. Sie können einen Prismenschliff aufweisen oder mit einer Polarisationsbeschichtung versehen sein, um den räumlichen Bildeindruck des Betrachters zu verstärken.

0168028

<u>Patentansprüche:</u>

1. Brille zur Erzeugung eines räumlichen Bildeindruckes bei einem Betrachter eines flächigen Bildes mit je einer im wesentlichen rotfarbenen und einer im wesentlichen grünfarbenen durchsichtigen Sichtscheibe, dadurch gekennzeichnet, daß die Sichtscheiben (2, 3) optische Achsen aufweisen, die in mindestens einem Winkel zu einer Blickrichtung des Betrachters (4) verlaufen.

2. Brille nach Anspruch 1, dadurch gekennzeichnet, daß die optischen Achsen der Sichtscheiben (2, 3) in zwei Winkeln zu der Blickrichtung des Betrachters (4) verlaufen.

3. Brille nach Anspruch 1 und 2, dadurch gekennzeichnet, daß die Sichtscheiben (2, 3) im Winkel
zueinander verlaufen.

4. Brille nach Anspruch 1 bis 3, dadurch gekennzeichnet, daß die Sichtscheiben (2, 3) in mindestens einem Winkel zu einer von dem Bild aufgespannten Ebene verlaufen.

5. Brille nach Anspruch 1 bis 4, dadurch gekennzeichnet, daß die Sichtscheiben (2, 3) Ebenen aufspannen, die jeweils im Winkel zu einer Verbindungslinie zwischen den Augen (16) des Betrachters (4) verlaufen und von dieser durchdrungen
sind.

6. Brille nach Anspruch 1 bis 4, dadurch gekennzeichnet, daß die Sichtscheiben (2, 3) mindestens
eine Ebene aufspannen, die im Abstand zu der Verbindungslinie verläuft.

7. Brille nach Anspruch 1 bis 6, dadurch gekennzeichnet, daß die Sichtscheiben (2, 3) beweglich
zueinander gehaltert sind.

8. Brille nach Anspruch 1 bis 7, dadurch gekennzeichnet, daß die Winkel, die die Sichtscheiben
(2, 3) zu der von dem Bild aufgespannten Ebene
einhalten, veränderbar sind.

0168028

9. Brille nach Anspruch 1 bis 8, dadurch gekennzeichnet, daß die Winkel, die die Sichtscheiben (2, 3) zu der von dem Bild aufgespannten Ebene einhalten, stufenlos veränderbar sind.

lo. Brille nach Anspruch 1 bis 9, dadurch gekennzeichnet, daß die Sichtscheiben (2, 3) über mindestens je ein Lager (15, 24, 25, 31, 32, 38) beweglich mit einem Brillengestell (1) verbunden sind, das an Ohren (5, 6) und Nase (19) des Betrachters (4) gehaltert ist.

11. Brille nach Anspruch 1 bis 1o, dadurch gekennzeichnet, daß das Lager (15, 24, 25) im Bereich je einer Kante (26, 27) jeder Sichtscheibe (2, 3) angeordnet ist.

12. Brille nach Anspruch 1 bis 11, dadurch gekennzeichnet, daß das Lager (15, 24, 25) sich entlang der ihm zugewandten Kante (26, 27) erstreckt.

13. Brille nach Anspruch 1 bis 12, dadurch gekennzeichnet, daß das Lager (15) an einander zugekehrten Kanten (26) der beiden Sichtscheiben (2, 3) angeordnet ist.

14. Brille nach Anspruch 1 bis 12, dadurch gekennzeichnet, daß die Lager (24, 25) an einander abgewandten Kanten (27) der beiden Sichtscheiben (2, 3) angeordnet sind.

0168028

15. Brille nach Anspruch 1 bis 1o, dadurch gekennzeichnet, daß jede Sichtscheibe (2, 3) mit jeweils
zwei Lagern (31, 32, 38) an dem Brillengestell
(1) gehaltert ist.

16. Brille nach Anspruch 1 bis 1o, 15, dadurch
gekennzeichnet, daß die Lager (31, 32, 38) an einander abgewandten Kanten (35, 4o) jeder Sichtscheibe (2, 3) vorgesehen sind.

17. Brille nach Anspruch 1 bis 1o, 15, 16, dadurch
gekennzeichnet, daß die Lager (31, 32, 38) jeweils
etwa im Bereich einer Mitte (34) der ihnen jeweils
zugekehrten Kante (35, 4o) angeordnet sind.

18. Brille nach Anspruch 1 bis 17, dadurch gekennzeichnet, daß die Lager (15, 24, 25, 31, 32, 38)
selbsthemmend ausgebildet sind.

19. Brille nach Anspruch 1 bis 8, 1o bis 18, dadurch gekennzeichnet, daß die Lager (15, 24, 25,
31, 32, 38) die Sichtscheiben (2, 3) in vorgewählten Winkelstellungen festlegende Rastungen
aufweisen.

2o. Brille nach Anspruch 1 bis 6, dadurch gekennzeichnet, daß die Sichtscheiben (2, 3) starr mit
dem Brillengestell (1) verbunden sind.

21. Brille nach Anspruch 1 bis 6, 2o, dadurch gekennzeichnet, daß die Sichtscheiben (2, 3) mit
ihren einander zugekehrten Kanten     einen geringsten Abstand zu der Nase (19) des Betrachters (4)
einhalten.

**0168028**

22. Brille nach Anspruch 1 bis 6, 2o, dadurch gekennzeichnet, daß die Sichtscheiben (2, 3) mit ihren einander zugekehrten Kanten einen weitesten Abstand zu der Nase (19) des Betrachters (4) einhalten.

23. Brille nach Anspruch 1 bis 6, 2o, dadurch gekennzeichnet, daß die Sichtscheiben (2, 3) mit ihren einer Stirn (9) des Betrachters (4) zugewandten Oberkanten einen geringsten Abstand zu der Stirn (9) einhalten.

24. Brille nach Anspruch 1 bis 6, 2o, dadurch gekennzeichnet, daß die Sichtscheiben (2, 3) mit ihren der Stirn (9) des Betrachters (4) zugewandten Oberkanten einen weitesten Abstand zu der Stirn (9) des Betrachters (4) einhalten.

25. Brille nach Anspruch 1 bis 24, dadurch gekennzeichnet, daß das Brillengestell (1) im wesentlichen aus Kunststoff besteht.

26. Brille nach Anspruch 1 bis 25, dadurch gekennzeichnet, daß die Sichtscheiben (2, 3) aus Glas bestehen.

27. Brille nach Anspruch 1 bis 25, dadurch gekennzeichnet, daß die Sichtscheiben (2, 3) aus Kunststoff bestehen.

28. Brille nach Anspruch 1 bis 25, 27, dadurch gekennzeichnet, daß die Sichtscheiben (2, 3) aus Kunststoffolie bestehen.

- 13-

29. Brille nach Anspruch 1 bis 28, dadurch gekennzeichnet, daß die Sichtscheiben (2, 3) im wesentlichen einander planparallel verlaufende Oberflächen aufweisen.

30. Brille nach Anspruch 1 bis 29, dadurch gekennzeichnet, daß die Oberflächen der Sichtscheiben (2, 3) mit einem Prismenschliff versehen sind.

31. Brille nach Anspruch 1 bis 3o, dadurch gekennzeichnet, daß mindestens eine Oberfläche der Sichtscheiben (2, 3) mit einer Polarisationsbeschichtung versehen ist.

Fig. 1

Fig. 2

Fig. 3

0168028

1/2

33  29  2  35  3  28  33
31                          32
                            30
7                           1
5                           8
9    34
   19
4                           6

Fig. 4

9  1  7  4
36
34
40
2
38
37  39  19  5

Fig. 5